# EUROPEAN PATENT APPLICATION

(11) **EP 4 553 935 A1**
(43) Date of publication of application: **14.05.2025**
(21) Application number: 23315414.5
(22) Date of filing: 09.11.2023
(51) Int. Cl.: H01M 8/04007, H01M 8/04029, H01M 10/625, H01M 10/613, H01M 10/46, H01M 16/00

(54) **HYBRID SYSTEM**

(71) Applicant: H2X Ecosystems, 35170 Bruz (FR)
(72) Inventor: Paul, Stéphane, 29200 BREST (FR); Fleureau, Jean-Luc, 29460 DAOULAS (FR)
(74) Representative: Yes My Patent

(57) **Abstract**

The invention concerns a hybrid system (1), comprising at least: a body; a hydrogen fuel cell (20); solar panels (30); a battery pack (40) electrically connected to the hydrogen fuel cell (20), and the solar panels (30); a heat-regulating assembly (50) comprising a FC cooling system (60) for the hydrogen fuel cell (20) and a BP cooling system (70) for the battery pack (40); and an electronic control system (90).

## Description

### TECHNICAL FIELD OF THE INVENTION

The invention concerns a hybrid system, comprising a hydrogen fuel cell, solar panels, a battery pack, and a heat-regulating assembly.

### BACKGROUND OF THE INVENTION

Nowadays, it is known to design vehicles as hybrid systems, with different energy sources powering the engine. The energy sources need to have their heat regulated to optimize their operations.

FR3059833, US8758924, US20210313636, EP3598565, US9759495 disclose different heat control systems. However, each system is configured for a specific use, and some systems are complex to implement.

The invention relates to the development of a hybrid system, that can be configured as a vehicle or a stationary system, and that comprises a hydrogen fuel cell; solar panels; a battery pack electrically connected to the hydrogen fuel cell and the solar panels.

### SUMMARY OF THE INVENTION

The aim of the invention is to provide an improved hybrid system.

To this end, the invention concerns a hybrid system, comprising at least: a body; a hydrogen fuel cell; solar panels; a battery pack electrically connected to the hydrogen fuel cell and the solar panels; a heat-regulating assembly comprising a FC cooling system for the hydrogen fuel cell and a BP cooling system for the battery pack; and an electronic control system.

Thanks to the invention, the fuel cell and the battery pack can have their heat controlled efficiently, so they can operate correctly in different climates, with different air temperatures around the hybrid system.

According to further aspects of the invention which are advantageous but not compulsory, such a hybrid system may incorporate one or several of the following features:
- The FC cooling system and the BP cooling system have independent fluid circuits.
- Each of the fluid circuits is provided with a pump.
- Each of the fluid circuits is provided with an expansion vase, having a capacity between 0.2 liter and 1.2 liter.
- The FC cooling system comprises a fluid circuit in contact with the hydrogen fuel cell.
- The BP cooling system comprises a fluid circuit in contact with the battery pack.
- The fluid circuit of the FC cooling system comprises a radiator connected to the hydrogen fuel cell and a liquid circulating through the radiator.
- The fluid circuit of the BP cooling system comprises a metal plate assembly fixed to the battery pack and a liquid circulating through the metal plate assembly.
- The heat-regulating assembly comprises a heat barrier disposed between the fluid circuits.
- The FC cooling system comprises an air circuit in contact with the fuel cell.
- The BP cooling system comprises an air circuit in contact with the battery pack.
- The heat-regulating assembly further comprises a heating system for the battery pack.
- The hybrid system is configured as a stationary system.
- The electronic control system includes at least two programs: warm climate, and cold climate.
- The hybrid system is configured as a vehicle, wherein the body is provided with displacement means, such as wheels, tracks, etc.
- When the hybrid system is configured as a vehicle, the electronic control system includes at least four programs: stationary vehicle in a warm climate, stationary vehicle in a cold climate, moving vehicle in a warm climate, and moving vehicle in a cold climate.
- The electronic control system is configured to keep the cooling systems shut down when the vehicle is moving.

### BRIEF DESCRIPTION OF THE DRAWINGS

The invention will now be explained in correspondence with the annexed figures, and as an illustrative example, without restricting the object of the invention. In the annexed figures:
- figure 1 is a schematic view of a hybrid system according to the invention, in its environment;
- figure 2 is a schematic view of a hybrid system according to the invention, showing its fuel cell, battery pack, and heat-regulating assembly;
- figure 3 is a schematic view of a hybrid system according to the invention, showing its FC cooling system;
- figure 4 is a schematic view of a hybrid system according to the invention, showing its FC cooling system, BP cooling system, and BP heating system;
- figure 5 is a schematic view similar to figure 4, with a different BP heating system;
- figure 6 is another schematic view similar to figure 4, with another different BP heating system;
- figure 7 is a schematic view of a hybrid system according to the invention, showing its FC cooling system;
- figure 8 is a schematic view of a hybrid system according to the invention, showing its BP cooling system and BP heating system;
- figure 9 is a perspective view of a battery pack equipped with a metal plate assembly;
- figure 10 is a vertical sectional view of the battery pack of figure 9;
- figure 11 is a horizontal sectional view of the metal plate assembly of figure 9;
- figure 12 is a horizontal sectional view similar to figure 11, for a different embodiment of a metal plate assembly;
- figure 13 is a side view of a battery pack and its surrounding elements, according to a particular embodiment;
- figure 14 is a diagram showing different cooling solutions, depending on the air temperature;
- figure 15 is a schematic view of a hybrid system according to the invention, showing its BP cooling system and BP heating system, with a particular embodiment of the battery pack and metal plate assembly;
- figure 16 is a vertical sectional view of the battery pack and metal plate assembly of figure 15;
- figure 17 is a perspective view of the metal plate assembly made of two plates;
- figure 18 is an upper view showing the lower plate of figure 17; and
- figure 19 is an upper view showing the upper plate of figure 17;

### DETAILED DESCRIPTION OF SOME EMBODIMENTS

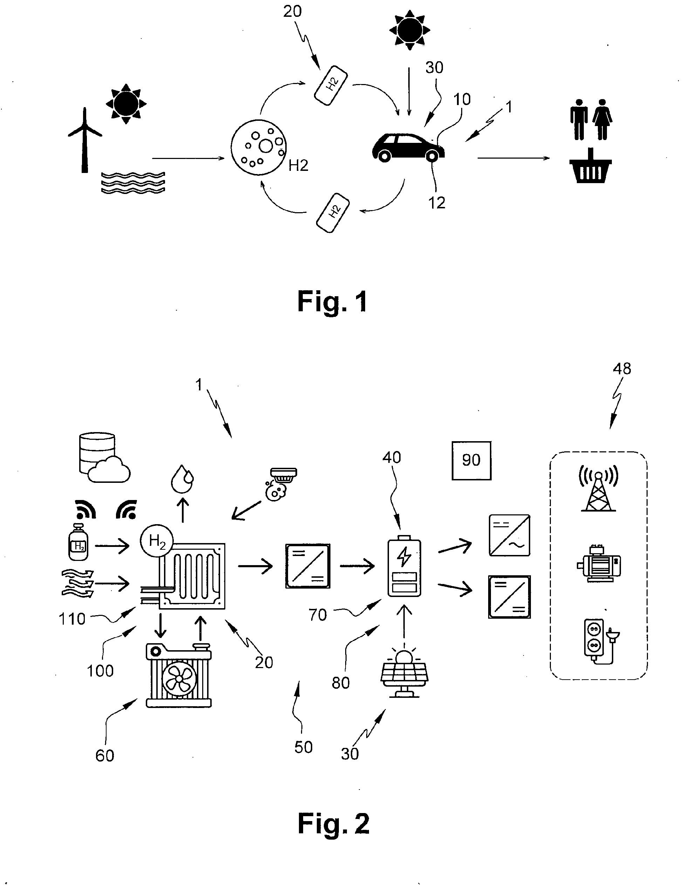

Figure 1 shows the first embodiment of a hybrid system (1) according to the invention, in its environment. The system (1) is configured as a vehicle, having a body (10), displacement means (12), and an engine not shown. Solar energy, wind energy, hydro energy, but also steam reforming and pyrolysis, can be used to produce hydrogen fuel cells (20), that can be used to power the system (1). Furthermore, the system (1) is equipped with solar panels (30), receiving solar energy. This system (1) configured as a vehicle can provide mobility service to the population.

Figure 2 shows in more detail the system (1), comprising a hydrogen fuel cell (20), solar panels (30), a battery pack (40), a heat-regulating assembly (50), and an electronic control system (90).

The battery pack (40) is electrically connected to the hydrogen fuel cell (20) and the solar panels (30). The battery pack (40) can be selectively powered by the hydrogen fuel cell (20) and/or the solar panels (30).

The battery pack (40) can have different outputs (48), such as a communication device, an electric motor for moving the displacement means (12), or an electric plugging for powering other devices.

The heat-regulating assembly (50) comprises a FC cooling system (60) for the hydrogen fuel cell (20), a BP cooling system (70) for the battery pack (40), and a heating system (80) for the battery pack (40).

The heat-regulating assembly (50) is configured for maintaining the internal temperature of the hydrogen fuel cell (20) at 85°C maximum in operations, and the internal temperature of the battery pack (40) between 5°C and 45°C in operations.

The FC cooling system (60) has a fluid circuit (62) comprising a radiator (100) connected to the hydrogen fuel cell (20) and a liquid (110) circulating through the radiator (100).

The electronic control system (90) is designed for the management of the energetic flux in the hybrid system (1), in particular the fluids of systems (60, 70, 80). The electronic control system (90) is connected to the fuel cell (20), the battery pack (40) and the heat-regulating assembly (50).

Because of the fuel cell (20) and the battery pack (40), the hybrid system (1) can be operated at an altitude of 2000 meters maximum, preferably 1500 meters maximum, above sea level.

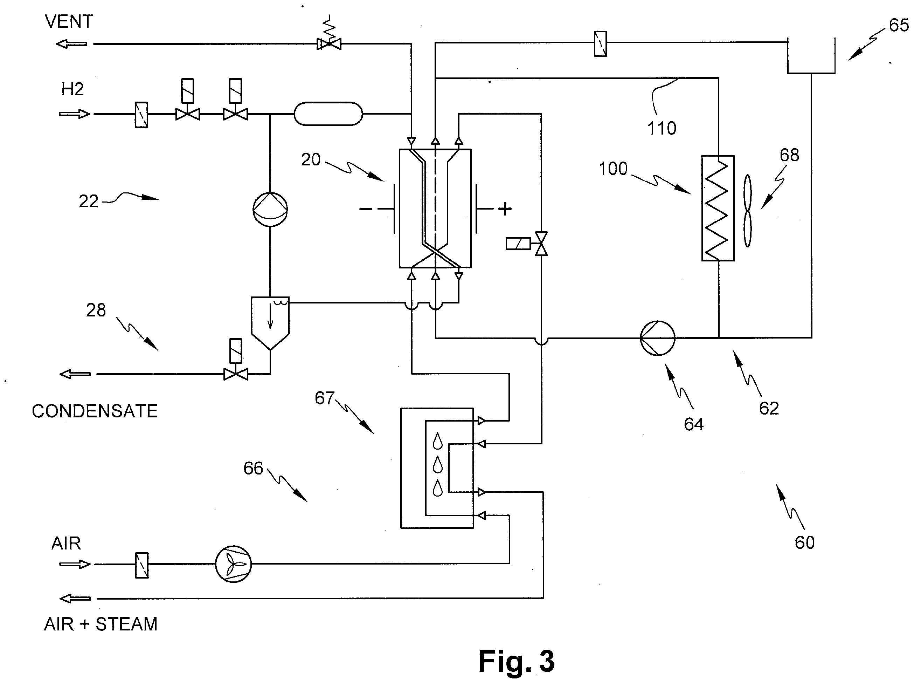

Figure 3 shows the fuel cell (20) and FC cooling system (60).

The fuel cell (20) is provided with a hydrogen inlet circuit (22) and a purge unit (26). The FC cooling system (60) comprises a fluid circuit (62) and an air circuit (66) in contact with the fuel cell (20). Thus, the fuel cell (20) is connected to the three circuits (22, 62, 66). The fluid circuit (62) comprises a pump (64) and an expansion vase (65). The fluid circuit (66) comprises a humidifier (67). The FC cooling system (60) also comprises at least one fan (68) for cooling the liquid (110). The fluid circuit (62) of the FC cooling system (60) comprises the radiator (100) connected to the hydrogen fuel cell (20) and the liquid (110) circulating through the radiator (100).

In particular embodiments, the air circuit (66) is provided with at least one fan (68) arranged for projecting air on the hydrogen fuel cell (20), on the fluid circuit (62), or on the radiator (100). Preferably, the air circuit (66) comprises between four and eight fans (68), for example, six fans (68).

The fans (68) can be located at a distance from the radiator (100) between 2 and 10 cm, for example, 6 cm. The fans (68) can be mounted on a support plate ensuring proper positioning of the fans (68) in the air circuit (66), proper sealing of the air circuit (66), and protection of the fans (68) from possible shocks. The air circuit (66) can be configured to project air at a speed between 1,2 and 2 m/s, for example, 1,6 m/s, and at a flow between 1300 and 2000 m³/h, for example, 1650 m³/h.

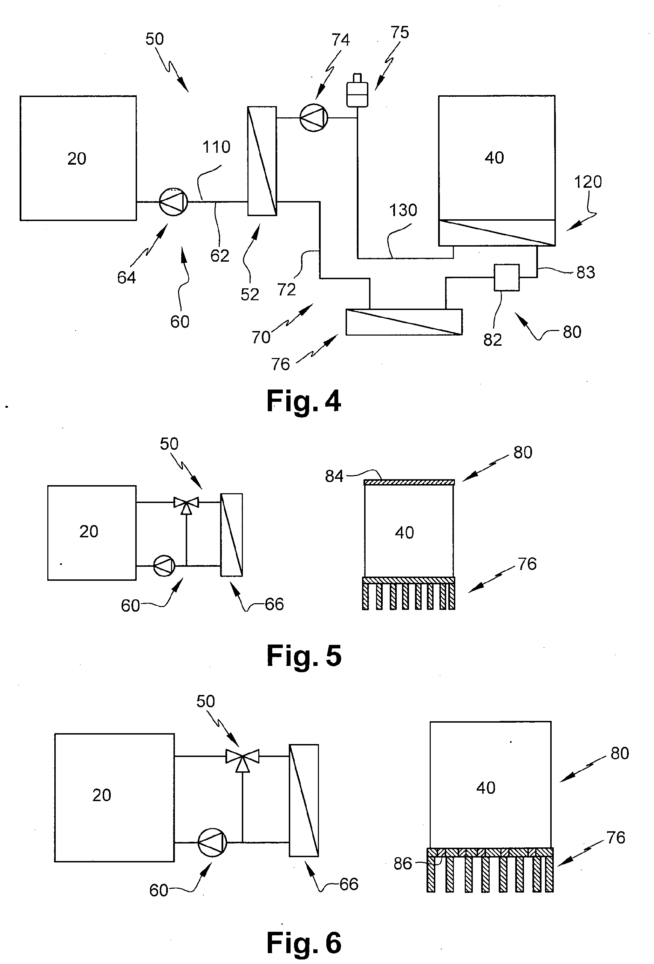

Figure 4 shows the fuel cell (20), the battery pack (40), and the heat-regulating assembly (50).

The heat regulating assembly (50) comprises the FC cooling system (60) for the hydrogen fuel cell (20), the BP cooling system (70) for the battery pack (40), and the heating system (80) for the battery pack (40).

The FC cooling system (60) has a simplified representation, with the fluid circuit (62) with the pump (64).

The BP cooling system (70) comprises a fluid circuit (72) and a fluid circuit (76) in contact with the battery pack (40). The fluid circuit (72) comprises a pump (74) and an expansion vase (75).

Furthermore, the heat-regulating assembly (50) comprises a heat barrier (52) disposed between the fluid circuits (62; 72).

The fluid circuits (62; 72) are preferably independent, so they can have different fluids (110; 130) and different temperatures.

In a particular embodiment, the fluid circuit (62) of the FC cooling system (60) can comprise a non-conductive liquid (110), while the fluid circuit (72) of the BP cooling system (70) can comprise a conductive liquid (130).

The capacity of the expansion vases (65; 75) is configured in relation to the global design of the circuits (62; 72). In a particular embodiment, the expansion vases (65; 75) each have a capacity between 0.2 liter and 1.2 liter.

Preferably, the fluid circuit (62) of the FC cooling system (60) comprises a liquid (110) including between 25% and 75% of ethylene glycol, such as glysantin fc g 20-00/50.

Figures 4 to 6 show different embodiments of the heat-regulating assembly (50) and the heating system (80).

In figure 4, the heating system (80) comprises a heating element (82) integrated into a fluid circuit (83) circulating up to the battery pack (40). The heating element (82) can be advantageously configured as glow plugs, having a 12V or 24V power supply compatible with a vehicle.

In figure 5, the heating system (80) comprises a heating blanket (84) resting against the battery pack (40).

In figure 6, the heating system (80) comprises a heating resistance (86) in contact with the battery pack (40), for example, configured as a metal winding or a glow plug.

As an alternative, especially when the system (1) is designed for countries having a warm climate, the heat-regulating assembly (50) can be devoid of heating system (80).

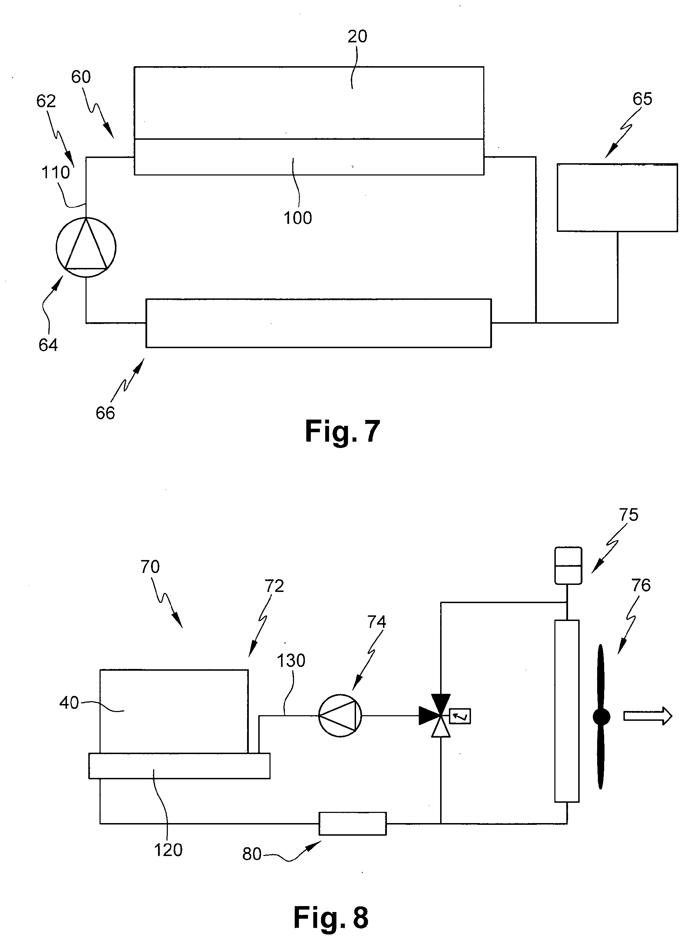

Figure 7 shows the FC cooling system (60), having a fluid circuit (62) and an air circuit (66). The fluid circuit (62) comprises the radiator (100) connected to the fuel cell (20) and the liquid (110) circulating through the radiator (100).

The radiator (100) has a thickness between 15 and 45 millimeters, for example, 30 millimeters. The radiator (100) has a weight between 2 and 6 kilograms, for example, 4 kilograms. The radiator (100) has a capacity between 0.6 and 3 liters, for example, 2 liters. The liquid (110) circulates through the radiator (100) with a flow rate comprised between 5 and 15 liters per minute, for example, 10 liters per minute.

Figure 8 shows the BP cooling system (70), having a fluid circuit (72) and an air circuit (76). The heating element (80) is connected to the fluid circuit (72). The fluid circuit (72) comprises a metal plate assembly (120) fixed to the battery pack (40) and a liquid (130) circulating through the metal plate assembly (120).

The metal plate assembly (120) has a thickness between 5 and 15 millimeters, for example 10 millimeters. The metal plate assembly (120) has a weight between 10 and 40 kilograms, for example 25 kilograms. The metal plate assembly (120) has a capacity between 0.2 and 0.6 liter, for example, 0.4 liter.

The liquid (130) circulates through the metal plate assembly (120) with a flow rate comprised between 5 and 15 liters per minute, for example, 10 liters per minute. The liquid (130) enters the metal plate assembly (120) at a temperature between 15 and 25°C, for example, 20°C. The liquid (130) is preferably distant from the battery pack (40) by no more than 2 millimeters. The liquid (130) can be a mix of water and ethylene glycol or propylene glycol.

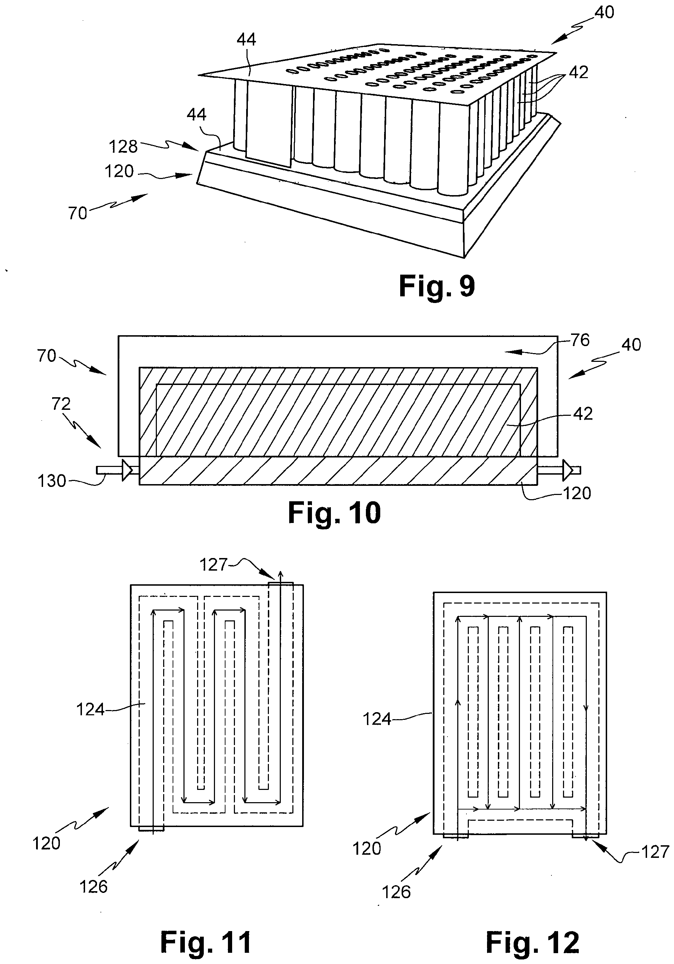

Figures 9 and 10 show an embodiment of the battery pack (40), comprising several battery units (42) mounted between two printed circuit boards (44). The lower circuit board (44) is fastened to a metal plate assembly (120). For example, a thermal fastener (128), such as a paste or film, is disposed of between the lower circuit board (44) and the metal plate assembly (120). The thermal fastener (128) has a thickness between 1 and 10 millimeters, for example, 5 millimeters.

Figures 11 and 12 show two different embodiments of a metal plate assembly (120).

Each of these metal plate assemblies (120) includes a single circuit (124) receiving the liquid (130), with parallel grooves (125) extending in a longitudinal direction, an entry (126), and an exit (127). The entry (126) and the exit (127) are provided with hydraulic connectors, not shown for simplification purposes.

In figure 9, the entry (126) and the exit (127) are located on opposite sides of the metal plate assembly (120)

In figure 10, the entry (126) and the exit (127) are located on the same side of the metal plate assembly (120)

According to the experiments performed on these two embodiments, the metal plate assembly (120) of figure 10 shows better results for cooling the battery pack (40). With a shorter circuit (124) between the entry (126) and the exit (127), the liquid (130) will stay a shorter time in the metal plate assembly (120) and its temperature increase will be smaller.

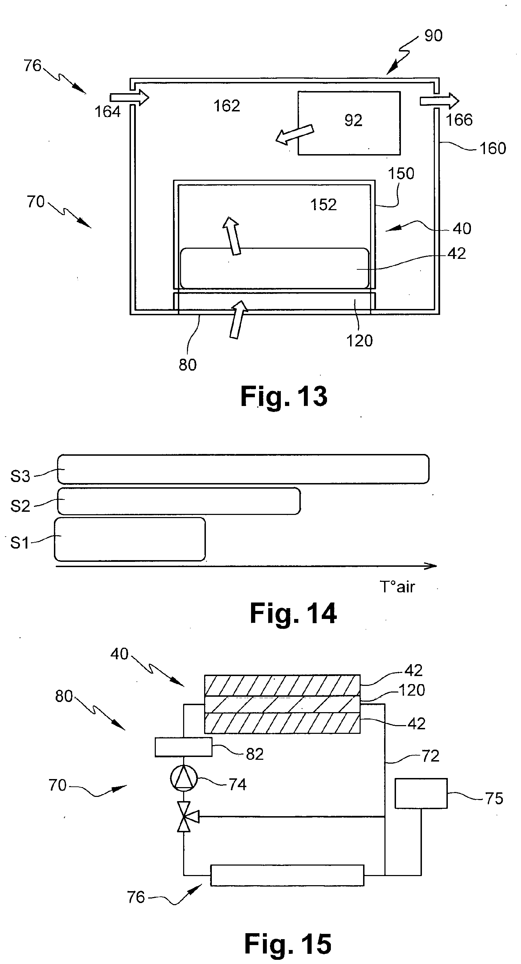

Figure 13 shows a specific embodiment of the BP cooling system (70), where the air circuit (72) comprises an inner casing (150) surrounding the battery pack (40) and an outer casing (160) surrounding the inner casing (160) and a safety box (92) belonging to the electronic control system (90).

The safety box (92) controls the safety of the system (1): leak detection, hydrogen flux control, emergency stop, etc. Temperature sensors and hydrogen sensors are connected to the safety box (92).

The inner casing (150) comprises an air volume (152), that will be heated by the battery pack (40). The outer casing (160) comprises an air volume (162), an entry (164), and an exit (166). The air volume (162) will be heated by the inner casing (150), but also cooled down by the air flux generated between the entry (164) and the exit (166). This air flux can be generated by an air conditioning device equipping the system (1), by ambient air, or by displacement air when the system (1) configured as a vehicle is moving.

In a particular embodiment, the air circuit (76) can be provided with an air exchanger, having a thickness between 12 and 20 millimeters, for example, 16 millimeters.

In other particular embodiments, the air circuit (76) can be provided with at least one fan arranged for projecting air on the battery pack (40) or on the fluid circuit (72), preferably between two and six fans, for example, four fans.

The fans can be located at a distance from the metal plate assembly (120) comprised between 2 and 6 cm, for example, 4 cm. The fans can be mounted on a support plate ensuring the proper positioning of the fans (78) in the air circuit (76), proper sealing of the air circuit (76), and protection of the fans (78) from possible shocks. The air circuit (76) can be configured to project air on the battery pack (40) at a speed between 1.2 and 2 m/s, for example 1.6 m/s, and at a flow between 800 and 1400 m³/h, for example 1100 m³/h.

Figure 14 shows three different solutions for cooling the battery pack (40), depending on the air temperature (T°ₐᵢᵣ) around the system (1).

Solution S1 is a direct cooling by air, possibly using the air circuit (76). It can be used when the air temperature (T°ₐᵢᵣ) is low, for example between -10 and 10°C.

Solution S2 is a cooling by air, possibly using the fluid circuit (72), preferably equipped with the metal plate assembly (120). It can be used when the air temperature (T°ₐᵢᵣ) is low or intermediate, for example between -10 and 15°C.

Solution S3 is a cooling by water and air, possibly using both the fluid circuit (72) and the air circuit (76), preferably with an air conditioning device integrated into the air circuit (76). It can be used when the air temperature (T°ₐᵢᵣ) is low, intermediate, or high, for example between -10 up to 25°C.

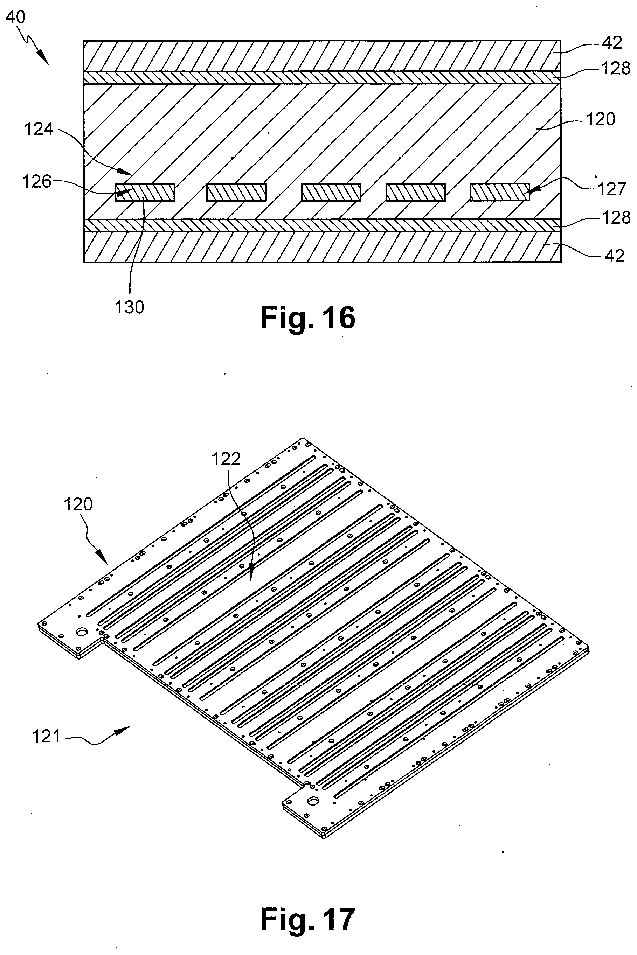

Figures 15 and 16 show a specific embodiment of the battery pack (40), comprising two ranges of battery units (42), mounted on either side of the metal plate assembly (120). This allows the cooling of more battery units (42) with a single metal plate assembly (120), integrated into a single fluid circuit (72).

The fluid circuit (124) formed in the metal plate assembly (120) can be located closer to one range of battery units (42), that will be less cooled by the air circuit (76) than the other range of battery units (42).

Alternately, the fluid circuit (124) formed in the metal plate assembly (120) can be located at the same distance from each range of battery units (42).

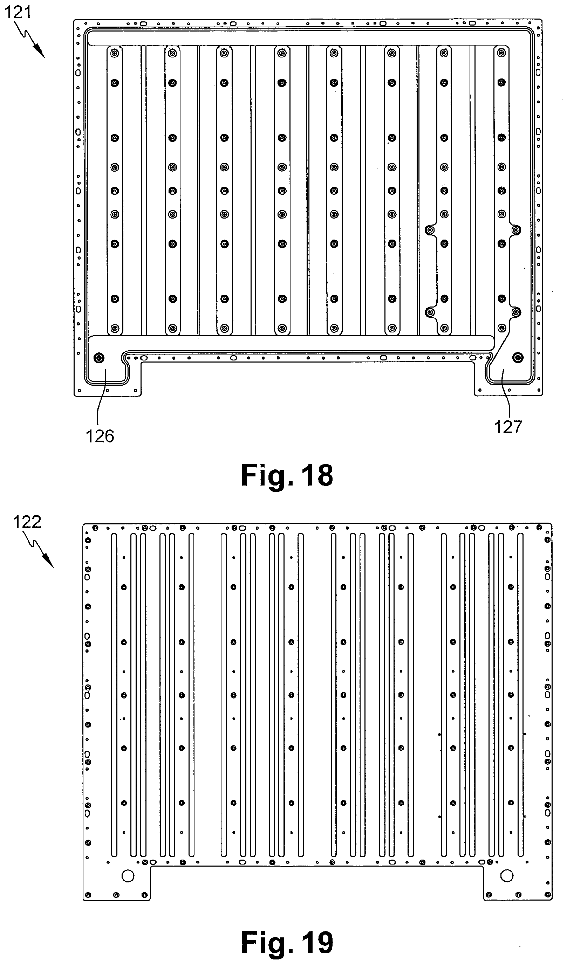

Figures 17 to 19 show the metal plate assembly (120), formed of two metal plates (121, 122).

The metal plate assembly (120) comprises sealing elements between the two metal plates (121, 122) to prevent leakage of the liquid (130) outside the metal plate assembly (120)

The metal plate assembly (120) comprises threads for fastening the battery pack (40) and sealing elements, preferably o-rings, disposed inside the two metal plates (121, 122) around the threads.

When the hybrid system (1) is configured as a vehicle, the electronic control system (90) can include at least four programs:
- stationary vehicle in a warm climate,
- stationary vehicle in a cold climate,
- moving vehicle in a warm climate, and
- moving vehicle in a cold climate.

When the vehicle is moving, the air displacement allows evacuating calories from the fuel cell (20) and the battery pack (40), so there's no need to power on the fans. In practice, we note that the evacuation of calories is mainly from the fuel cell (20).

This, it is possible to configure the electronic control system (90) to keep the cooling systems (60, 70) shut down when the vehicle is moving.

When the hybrid system (1) is configured as stationary, the electronic control system (90) can include two programs: warm climate and cold climate.

In the description here-above and on the figures, similar elements have the same references and work in the same way.

Other non-shown embodiments can be implemented within the scope of the invention, defined by the set of claims.

In addition, technical features of the different embodiments can be, in whole or part, combined with each other. Thus, the hybrid system 1 can be adapted to the specific requirements of the application.

## Claims

1. Hybrid system (1), comprising at least:
- a body (10);
- a hydrogen fuel cell (20);
- solar panels (30);
- a battery pack (40) electrically connected to the hydrogen fuel cell (20) and the solar panels (30);
- a heat-regulating assembly (50) comprising a FC cooling system (60) for the hydrogen fuel cell (20) and a BP cooling system (70) for the battery pack (40); and
- an electronic control system (90).

2. Hybrid system (1) according to claim 1, wherein the FC cooling system (60) and the BP cooling system (70) have independent fluid circuits (62; 72).

3. Hybrid system (1) according to any one of the previous claims, wherein each of the fluid circuits (62; 72) is provided with a pump (64; 74).

4. Hybrid system (1) according to any one of the previous claims, wherein each of the fluid circuits (62; 72) is provided with an expansion vase (65; 75), having a capacity between 0.2 liter and 1.2 liter.

5. Hybrid system (1) according to any one of the previous claims, wherein the FC cooling system (60) comprises a fluid circuit (62) in contact with the hydrogen fuel cell (20).

6. Hybrid system (1) according to any one of the previous claims, wherein the BP cooling system (70) comprises a fluid circuit (72) in contact with the battery pack (40)

7. Hybrid system (1) according to claim 5, wherein the fluid circuit (62) of the FC cooling system (60) comprises a radiator (100) connected to the hydrogen fuel cell (20) and a liquid (110) circulating through the radiator (100).

8. Hybrid system (1) according to claim 6, wherein the fluid circuit (72) of the BP cooling system (70) comprises a metal plate assembly (120) fixed to the battery pack (40) and a liquid (130) circulating through the metal plate assembly (120).

9. Hybrid system (1) according to claims 5 and 6, wherein the heat-regulating assembly (50) comprises a heat barrier (52) disposed between the fluid circuits (62; 72).

10. Hybrid system (1) according to any one of the previous claims, wherein the FC cooling system (60) comprises an air circuit (66) in contact with the fuel cell (20).

11. Hybrid system (1) according to any one of the previous claims, wherein the BP cooling system (70) comprises an air circuit (76) in contact with the battery pack (40).

12. Hybrid system (1) according to any one of the previous claims, wherein the heat-regulating assembly (50) further comprises a heating system (80) for the battery pack (40).

13. Hybrid system (1) according to any one of the previous claims 1 to 12, configured as a stationary system.

14. Hybrid system (1) according to any one of the previous claims 1 to 12, configured as a vehicle, wherein the body (10) is provided with displacement means (12), such as wheels, tracks, etc.

15. Hybrid system (1) according to claim 14, wherein the electronic control system (90) includes at least four programs:
- stationary vehicle in a warm climate,
- stationary vehicle in a cold climate,
- moving vehicle in a warm climate, and
- moving vehicle in a cold climate.
